# EUROPEAN PATENT SPECIFICATION

(11) **EP 1 537 563 B1**
(45) Date of publication and mention of the grant of the patent: **21.06.2006**
(21) Application number: 03725425.7
(22) Date of filing: 19.05.2003
(51) Int. Cl.: G11B 5/70, G11B 5/62, G11B 5/738, G11B 5/72, G11B 5/80, B41M 5/124

(54) **MULTI-LAYER CARBONLESS SHEET PRODUCT**
MEHRSCHICHTIGES KARBONFREIES BOGENPRODUKT
PRODUIT DE FEUILLE SANS CARBONE MULTICOUCHE

(30) Priority: 29.05.2002 GB 0212358
(43) Date of publication of application: 08.06.2005
(73) Proprietor: ARJO WIGGINS LIMITED, Southampton, Hampshire SO15 1GA (GB)
(72) Inventor: TAYLOR, David John, Monks Risborough, Bucks HP27 0SS (GB); SAUNDERS, Richard David, Windsor, Berks SL4 3JZ (GB); HOBSON, Michael Eric, Longwick, Bucks HP27 9SE (GB)
(74) Representative: Scott, Susan Margaret
(86) International application number: PCT/GB2003/002148
(87) International publication number: WO 2003/101744

(56) References cited:
- EP-A- 0 492 628
- EP-A- 0 774 363
- WO-A-01/92961
- US-A- 3 496 015

## Description

This invention relates to a multi-layer carbonless sheet product, one of the layers of which comprises magnetically-activatable particles in a binder matrix.

Various types of pressure-sensitive (so-called "carbonless") copying paper are known, of which the most widely used is the transfer type. A business forms set using the transfer type of pressure-sensitive copying paper comprises an upper sheet (usually known as a "CB" sheet) coated on its lower surface with microcapsules containing a solution in an oil solvent or solvent composition of at least one chromogenic material and a lower sheet (usually known as a "CF" sheet) coated on its upper surface with a colour developer composition. If more than one copy is required, one or more intermediate sheets (usually known as "CFB" sheets) are provided, each of which is coated on its lower surface with microcapsules and on its upper surface with colour developer composition. Imaging pressure exerted on the sheets by writing, typing or impact printing ruptures the microcapsules, thereby releasing and transferring chromogenic material solution on to the colour developer composition and giving rise to a chemical reaction which develops the colour of the chromogenic material and so produces a copy image. In a variant of the above-described arrangement, the solution of chromogenic material may be present as dispersed droplets in a continuous pressure-rupturable matrix instead of being contained within discrete pressure-rupturable microcapsules. In another type of pressure-sensitive copying system usually known as a self-contained or autogenous system, microcapsules and colour developing co-reactant material are coated onto the same surface of a sheet, and writing, typing or printing on a sheet placed above the thus-coated sheet causes the microcapsules to rupture and release the solution of chromogenic material, which then reacts with the colour developing material on the sheet to produce a coloured image.

Such forms are generally used in applications involving an iterative or repeated process in which various sheets are removed at various stages in the process, often with additional written information, for example a signature or date, being added to one or more sheets. Loss or alteration of written data can cause a problem, and elaborate paper handling systems need to be in place to ensure proper tracking.

International (PCT) Patent Application No. WO 01/92961A discloses a sheet material carrying a coating containing cavities in which electrically- and/or magnetically-activatable particles are located. The thus-coated sheet material is machine-writable and -readable in a similar manner to media such as audio or video tapes, and floppy and hard disks for use in computers. The magnetically-activatable particles disclosed in WO 01/92961A are of the same general kind as used in media as just referred to, and include chromium dioxide, iron oxide, polycrystalline nickel-cobalt alloys, cobalt-chromium or cobalt-samarium alloys, or barium-ferrite. The base sheet on which the particles are coated is typically a natural or synthetic paper.

Such magnetically-activatable materials are strongly-coloured, for example dark brown, dark grey or black. As a result, papers carrying coatings of such materials have an aesthetically-unattractive appearance which does not match the excellent whiteness, opacity, printability and appearance normally expected of good quality paper products.

WPI Abstract Acc. No. 1989-244425 of JP 1176325 describes a magnetic recording paper with good printability which consists of a base paper, a magnetic recording layer formed on one side of the base paper, and a coating formed on the magnetic recording layer and made from an aqueous paint containing a white pigment.

Our experience is that it is not readily possible to mask the unattractive appearance of the magnetic layer of such products by the provision of a white-pigmented topcoat over the magnetically-activatable coating, unless very high pigment coatweights are used, for example of the order of 20 g m⁻². Even with such coatweights, the appearance of the final product may not be fully satisfactory.

WPI Abstract Acc. No. 2000-649395 of JP 2000192398 describes a wallpaper comprising sheets of paper containing iron powder kneaded with paste in between, which can be affixed to a concrete wall or to plaster board. Pictures and posters can then be affixed to the wall using magnets.

UK Patent Application No. 2109302A describes a sheet material comprising a three-layer laminate, the outer layers of the laminate being made of paper, and the middle layer of which is opaque. The middle layer may be a ferric oxide or magnetic oxide composition, and the specification states that sheet material in which a ferric oxide composite is present in the middle layer has been found to be capable of retaining magnetic images similarly to recording tape.

None of the above prior art makes any mention of pressure-sensitive papers.

The present invention provides a magnetically-activatable sheet product comprising a pair of laminated outer sheets between which is a magnetic layer comprising magnetically-activatable particles in a binder matrix, the outer sheets having sufficient opacity to mask the appearance of the magnetic layer; at least one of the outer sheets being provided on its outward facing surface with a coating which comprises either microcapsules containing a solution of at least one chromogenic material, or dispersed droplets containing at least one chromogenic material in a pressure-rupturable matrix, or a colour developer composition, or both microcapsules containing at least one chromogenic material and also a colour developer.

The outward facing surfaces may be coated with microcapsules containing a solution of at least one chromogenic material, or dispersed droplets containing at least one chromogenic material in a pressure-rupturable matrix on one side of the sheet and a colour developer composition on the opposite side of the sheet. A combination of the described coatings could also be used to manufacture self-contained CB sheets and the like commonly used in the carbonless paper industry.

The sheet product according to the invention is a sheet which is a pressure-sensitive copying system, or which comprises part of a pressure-sensitive copying system. Thus the sheet may comprise a CF layer, CB layer or autogenous layer via single coating. A CFB sheet could comprise CB and CF coating layers applied to opposite sides of the sheet.

The invention also provides a method of storing digital magnetic data, which comprises writing digital data to a product according to the invention using a magnetic data writer.

The invention also provides a method of reading digital magnetic data, which comprises writing digital data to a product according to the invention using a magnetic data writer, and subsequently reading said data using a magnetic data reader.

The outer sheets are preferably of paper, although plastic sheet materials which simulate the properties of paper (so-called "synthetic paper") can alternatively be used.

The magnetic layer may be formed by a coating (hereafter referred to as a "magnetic coating") on the inwardly facing surface of one or both of the outer sheets, or may be formulated as a laminating adhesive which is applied as or just before the two outer sheets are brought together in a laminating press or similar equipment.

In a preferred embodiment of the invention, the or each (one or both) outer sheet carries a pigment/binder primer coat on its inward facing surface. This enhances the masking effect, and also improves the magnetic properties of the product. It improves the "hold out" properties of the sheet with respect to a subsequently-applied magnetic coating, thereby facilitating the application of the magnetic coating in a uniform and even manner and minimizing waste of the magnetic coating by absorption into the body of the sheet.

Conveniently, the outer sheets are substantially identical (other than the outer coating layer(s)) and each comprises a base sheet of natural or synthetic paper, a pigment/binder primer coat and a magnetic coating on top of the primer coat. When laminated, the magnetic coatings are in face to face contact, and together form a single central magnetic layer. Alternatively, the magnetic layer can be formed by a magnetic coating present on only one of the two outer sheets. In either case, an additional laminating binder or adhesive is normally used to secure the sheets together to form the laminate. Such a binder may be, for example, a polyvinyl alcohol, a latex, a starch or a proteinaceous binder such as a soy protein derivative. A still further possibility, as already mentioned, is for the magnetic coating to be formulated as a laminating adhesive which is applied as or just before the two outer sheets are brought together in a laminating press or similar equipment. The adhesive or binder component of such an adhesive can be as just described for a laminating adhesive not containing magnetically-activatable particles.

The primer coat which may be present on one or both of the outer sheets is typically formulated from conventional coating pigments as used in the paper industry, for example calcium carbonate (particularly precipitated calcium carbonate), kaolin or other clays (particularly calcined clays) and/or, where high opacity is required and justifies the extra cost, titanium dioxide. The binder used can be conventional, for example a latex (particularly a styrene-butadiene or acrylic latex), a starch or starch derivative, a polyvinyl alcohol and/or a soy protein derivative or other proteinaceous material. The primer coatweight is typically in the range of about 5 to 15 g m⁻², but this can vary in accordance with the masking effect desired and the basis weight of the outer sheets used (heavier base papers normally require lower primer coatweights).

The magnetic coating can be formulated from magnetically-activatable materials as already referred to, for example chromium dioxide, iron oxide, polycrystalline nickel-cobalt alloys, cobalt-chromium or cobalt-samarium alloys, or barium-ferrite, although these do not constitute a comprehensive list of suitable materials. The binder used can be selected from the same materials as disclosed above for use in the laminating adhesive, but is typically a styrene-butadiene or acrylic or other latex. The coatweight applied is typically such that up to about 10 g m⁻² of magnetically-activatable material is present, but this can be varied in accordance with the level of magnetic character required. The magnetic coating can if desired contain an extender such as calcium carbonate, which not only offers cost reduction but also helps to reduce the darkness of the magnetic layer.

The material used for the outer sheets must be such as to provide a satisfactory masking effect and desirability also a good fmal product appearance, and capable of being visibly written or printed upon satisfactorily, but otherwise can be chosen to suit the intended final use of the laminated sheet product. For example, the outer sheets may be of a lightweight base paper (typically about 50 g m⁻² or less), so that when laminated, the final product will not be excessively thick or heavy. Lightweight base papers of the kind conventionally used in pressure-sensitive copying paper are of course particularly suitable in this context, since they are of good appearance and combine lightness with strength. In general, an outer sheet will be regarded as having sufficient coverage/opacity to mask the appearance of the magnetic layer if the whiteness of the resulting product, measured on an Elrepho 3000 instrument with the use of UV light enhancement, is within 5 points of the original base sheet on the L scale. Preferably the whiteness approaches that of the original base sheet used to produce the product.

Although it is possible to use a primer coat on each outer sheet to achieve the desired opacity, smoothness and hold-out for the outer sheets of the final laminated product, uncoated papers can be used for one or both of the outer sheets. Where the product contains only one outer sheet bearing an inward-facing primer coat, magnetic data is preferably written to and read from the side of the product carrying the primer coating.

Because of the nature of the processes in which pressure-sensitive papers are commonly used, the ability of one or more sheets of a set to carry magnetic information as well as visible information is a major advance, since it reduces or eliminates the requirement for human intervention and/or the requirement for retention of data stored, for example on business forms, in physical rather than electronic form. The present invention enables sheets to be provided not only with visible written information, but also with magnetically written information. This provides major benefits in terms of paper handling and consequential lowering of costs, in numerous circumstances.

Pressure sensitive coatings containing microcapsules would normally but not exclusively be coated following the lamination of the outer sheets described above, to prevent premature capsule rupture and impaired carbonless image formation. Non-microcapsule containing coatings may be coated either before or after the lamination of the outer sheets described above, as pressures applied to these coatings do not influence their carbonless image forming characteristics.

A preferred example of a product according to the invention comprises a first outer sheet provided with a pigment/binder primer coat on its inward facing surface, a magnetic layer comprising magnetically-activatable particles in a binder matrix, and a second outer sheet being provided on its outward facing surface with a coating which comprises a colour developer composition. Such a sheet will provide the bottom sheet of a set of business forms, and magnetic data can be written and read onto the form from the bottom of the set.

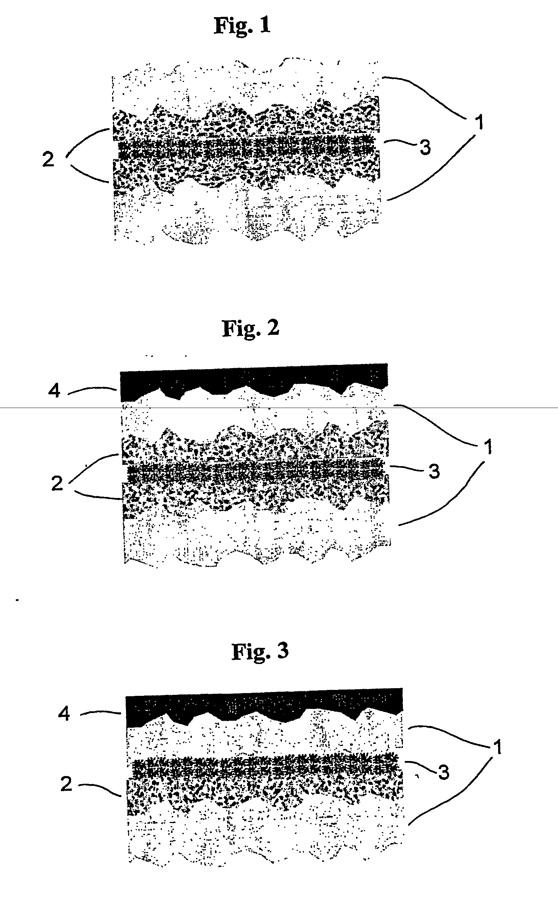

The invention will now be illustrated by the following Examples, in which all parts and percentages are by weight unless otherwise specified. Figures 1 to 6 illustrate products obtained in the Examples. Examples 1 to 3 illustrate basic techniques for producing a laminated sheet including a magnetic layer, while Examples 4 to 10 illustrate carbonless products according to the invention.

### Example 1

The product formed in this example is illustrated in Figure 1, in which (1) represents sheets of paper; (2) represents pigment/binder primer coats applied to the inward facing surfaces of sheets (1); and (3) represents a magnetic layer.

A 49 g m⁻² strong lightweight base paper of the kind conventionally used in pressure-sensitive copying paper was blade coated on a large-scale pilot plant coater with a 46% solids content aqueous primer coat formulation of the following composition:

| Component | Parts by weight (dry basis) |
|---|---|
| Calcined clay | 100 |
| Oxidised potato starch | 5 |
| Styrene-butadiene latex | 15 |

The coatweight applied was about 9 g m⁻² on a dry basis, and the result was an opaque paper with a flat primer-coated surface.

The primer coated surface was then coated with a 41 % solids content aqueous magnetic coating formulation using a small scale pilot plant blade coater. The coatweight applied was about 10 g m⁻² on a dry basis, and the coating formulation was as follows:

| Component | Parts by weight (dry basis) |
|---|---|
| Iron oxide | 100 |
| Styrene-butadiene latex | 17.6 |

A small-scale pilot coater/laminating press was used to laminate one ply of primer-and magnetic-coated paper as just described to a primer-coated sheet as described above but which did not carry a magnetic coating. The magnetic-coated surface faced inward, so that it formed a magnetic layer between the two paper plies. A 15% solids content aqueous solution of polyvinyl alcohol was used as a laminating adhesive and was continuously rod coated on to the magnetic coating just before the laminating nip.

The resulting product was then magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 2

This utilized two plies of the same primer-coated paper as in Example 1, but no magnetic coating was applied. Instead, a magnetically-activatable aqueous laminating adhesive formulation was applied by rod coating at a range of different application rates to one ply just before the two plies were laminated in a pilot scale laminating press as described in Example 1.

The laminating adhesive formulation had the following composition on a dry basis, and was applied at 50% solids content.

| Component | Parts by weight (dry basis) |
|---|---|
| Iron oxide | 84 |
| Calcium carbonate extender | 16 |
| Styrene-butadiene latex | 17 |

Six different application rates were applied ranging from 8 to 20 g m⁻² on a dry basis. This gave iron oxide contents of about 1 to 3 g m⁻².

All the resulting products were magnetically imageable and readable in the same manner as described in Example 1.

### Example 3

This was a variant of Example 1 in which each of the two primer-coated plies carried a magnetic coating, rather than just one. A lower magnetic coatweight was used (5 g m⁻²), so as to give much the same total magnetic layer coatweight. The composition of the magnetic coating was as in Example 1.

### Examples 4 to 6

These examples illustrate various methods for the production of a sheet of "carbonless" paper carrying a CF layer. The products formed are illustrated in Figure 2, in which (1) represents sheets of paper; (2) represents pigment/binder primer coats applied to the inward facing surfaces of sheets (1); (3) represents a magnetic layer; and (4) represents a CF layer.

### Example 4

In this example, the magnetic laminate product was converted into a carbonless CF (coated front) product via coating following the lamination process.

Magnetic laminate product, of the type described in Example 1, was coated with a 50% solids content clay based CF coating formulation using a laboratory Meyer bar rod coater to obtain a coatweight of between 5 -10 g/m² CF on a dry weight basis. The composition of the CF coating was :

| Component | % weight (dry basis) |
|---|---|
| Silton AC/PC reactive clay | 55 |
| SPS diluent clay | 30 |
| Styrene-butadiene latex | 15 |

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 5

In this example, a carbonless CF paper was base side coated with a pigment/binder layer and a magnetic layer and the resulting primer- and magnetically-coated CF was laminated against a primer- and magnetically-coated paper (produced as described in Example 1), using a semi-industrial laminating press.

Carbonless CF paper of 46g/m² total weight was coated on the base surface with 9g/m² of pigment/binder primer coat and subsequently 5g/m² of magnetic pigment using the large-scale pilot plant coater and coating mix formulations described in Example 1.

A pilot scale laminating press was used to laminate the magnetic surface of the primer-and magnetically-coated CF against a primer- and magnetically-coated paper (as described in Example 1, except that the magnetic pigment layer was reduced to 5g/m² on a dry weight basis. The reduced coating weight was achieved by dilution of the coating mix solids content). Both sheets were used with their magnetic-coated surfaces faced inwards. A high solids content commercial adhesive (Super-Lok 260, National Starch and Adhesives Ltd.) was used as the laminating adhesive, applied at a coatweight range of 5-6g/m². Standard press conditions (speed, pressure and drying temperature) were used to generate the laminated products.

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 6

In this example, a pigment/binder primer-coated carbonless CF was laminated against a pigment/binder primer-coated paper (produced as described in Example 1), using a magnetically-activatable aqueous laminating adhesive formulation.

Carbonless CF paper of 46g/m² total weight was coated on the base surface with 9g/m² of primer coat using the large-scale pilot plant coater and coating mix formulations described in Example 1.

A laboratory scale laminating press was used to laminate the primer-coated CF to a primer-coated paper (as in Example 1) using magnetically-activatable aqueous laminating glue as described in Example 2, except that polyvinyl alcohol was substituted for styrene-butadiene latex on a weight for weight basis. Iron oxide contents of up to 5g/m² were achieved.

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 7

In this example, a standard carbonless CF was laminated against a primer-coated paper (produced as described in Example 1), using a magnetically-activatable aqueous laminating adhesive formulation. The product formed is illustrated in Figure 3, in which (1) represents sheets of paper; (2) represents a pigment/binder primer layer; (3) represents a magnetic layer; and (4) represents a CF layer.

A base weight range of standard carbonless CF papers (57, 60 and 70g/m²) were laminated with their base sides facing inwards against the primer face of a primer-coated paper using the methodology and apparatus described in Example 6.

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope. The data could be written and read from either side of the sheet, but better results were obtained from the base side application of magnetic image, i.e. from the side bearing the pre-coat pigment/binder layer, than from the top side application of magnetic image.

### Example 8

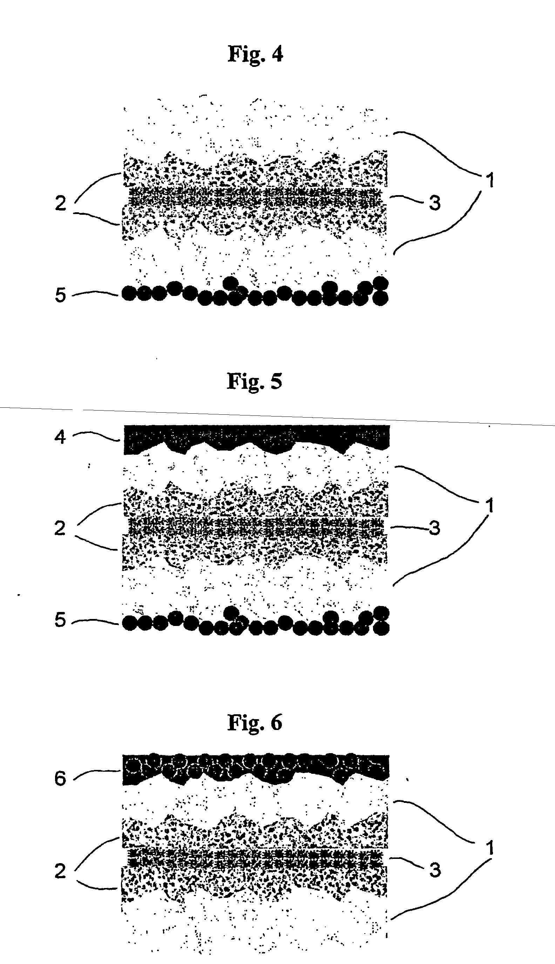

In this example, the magnetic laminate product was converted into a carbonless CB (coated back) product via coating following the lamination process. The product formed is illustrated in Figure 4, in which (1) represents sheets of paper; (2) represents pigment/binder layers; (3) represents a magnetic layer; and (5) represents a CB layer.

Magnetic laminate product, of the type described in Example 1, was coated with a 20% solids content CB coating formulation using a laboratory Meyer bar coater to obtain a coatweight of between 3-5 g/m² CB on a dry weight basis. The composition of the CB coating was :

| Component | % weight (dry basis) |
|---|---|
| CB microcapsules | 66 |
| Binder starch | 11.5 |
| Stilt starch | 22.5 |

The resulting CB product was used to image the reactive clay coated surface of standard carbonless CF paper, when pressure was applied to the 2 part-set in the manner usually associated with the usage of carbonless forms. A clear and legible image was obtained.

The resulting CB product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 9

In this example, a magnetic laminate CF product was converted into a carbonless CFB (coated front and back) product via coating following the lamination process. The product formed is illustrated in Figure 6, in which (1) represents sheets of paper; (2) represents pigment/binder layers; (3) represents a magnetic layer; (4) represents a CF layer; and (5) represents a CB layer.

Magnetic laminate CF product, of the type described in Example 5, was base surface coated with a 20% solids content CB coating formulation using a laboratory Meyer bar coater to obtain a coatweight of between 3-5 g/m² CB on a dry weight basis. The composition of the CB coating was :

| Component | % weight (dry basis) |
|---|---|
| CB microcapsules | 66 |
| Binder starch | 11.5 |
| Stilt starch | 22.5 |

The resulting CFB product was used to form the middle part of a 3-part carbonless set interleaved between standard carbonless CB and CF papers. The middle sheet was used to receive and transmit carbonless images when pressure was applied to the 3 part-set in the manner usually associated with the usage of carbonless forms. A clear and legible image was obtained on all parts of the set.

The resulting CFB product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope. Magnetic image could be applied onto either the base side or coated side of the paper.

### Example 10

In this example, a magnetic laminate product was converted into a carbonless self-contained or autogenous product via coating following the lamination process. The product formed is illustrated in Figure 6, in which (1) represents sheets of paper; (2) represents pigment/binder layers; (3) represents a magnetic layer; and (6) represents an autogenous (or self-contained) layer.

Magnetic laminate product, of the type described in Example 1, was coated with a 20% solids content self-contained coating formulation using a laboratory Meyer bar coater to obtain a coatweight of between 4-8 g/m² self-contained coating on a dry weight basis. The composition of the self-contained coating was :

| Component | % weight (dry basis) |
|---|---|
| Silton AC/PC reactive pigment | 50 |
| Styrene-butadiene latex | 10 |
| CB microcapsules | 20 |
| Stilt starch | 20 |

The resulting autogenous product was used to form the lower part of a 2 part set with a standard 80g/m² bond paper as the upper sheet. When pressure was applied to the 2 part-set in the manner usually associated with the usage of self-contained forms, a clear and legible image was obtained on the self-contained surface.

The resulting autogenous product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope. Magnetic image could be applied onto either the base side or coated side of the paper.

## Claims

1. A magnetically-activatable sheet product comprising a pair of laminated outer sheets between which is a magnetic layer comprising magnetically-activatable particles in a binder matrix, the outer sheets having sufficient opacity to mask the appearance of the magnetic layer; at least one of the outer sheets being provided on its outward facing surface with a coating which comprises either microcapsules containing a solution of at least one chromogenic material, or dispersed droplets containing at least one chromogenic material in a pressure-rupturable matrix, or a colour developer composition, or both microcapsules containing at least one chromogenic material and also a colour developer.

2. A magnetically-activatable sheet product as claimed in claim 1, in which one outward facing surface is provided with a coating of microcapsules containing a solution of at least one chromogenic material, or dispersed droplets containing at least one chromogenic material in a pressure-rupturable matrix, and the other outward facing surface is provided with a coating of a colour developer.

3. A magnetically-activatable sheet product as claimed in claim either claim 1 or claim 2, wherein the outer sheets are of paper.

4. A magnetically-activatable product as claimed in claim 3, wherein the outer sheets are each of a lightweight base paper of weight 50 g m⁻² or less.

5. A magnetically-activatable sheet product as claimed in either claim 1 or claim 2, wherein the outer sheets are of plastic sheet material which simulates the properties of paper.

6. A magnetically-activatable product as claimed in any preceding claim, in which at least one of the outer sheets is provided with a pigment/binder primer coat on its inward facing surface.

7. A magnetically-activatable product as claimed in claim 6, wherein the primer coat is formulated from conventional coating pigments as used in the paper industry.

8. A magnetically-activatable product as claimed in claim 7, wherein the primer coat is formulated from calcium carbonate, a clay, and/or titanium dioxide.

9. A magnetically-activatable product as claimed in claim 8, wherein the primer coat is formulated from precipitated calcium carbonate, a calcined clay, and/or titanium dioxide.

10. A magnetically-activatable product as claimed in any one of claims 6 to 9, wherein the primer coatweight is in the range of from 5 to 15 g m⁻².

11. A magnetically activatable product as claimed in any of the preceding claims, which comprises a first outer sheet provided with a pigment/binder primer coat on its inward facing surface, a magnetic layer comprising magnetically-activatable particles in a binder matrix, and a second outer sheet being provided on its outward facing surface with a coating which comprises a colour developer composition.

12. A magnetically-activatable product as claimed in any one of claims 1 to 10, wherein the outer sheets are substantially identical, other than the outer coating layer or layers, and each comprises a base sheet, a pigmentlbinder primer coat and a magnetic coating applied on top of the primer coat.

13. A magnetically-activatable product as claimed in any of claims 1 to 10 wherein each outer sheet comprises a base sheet, and a pigment/binder primer coat and wherein the magnetic layer is formed by a magnetic coating applied on top of the primer coat of one only of the outer sheets.

14. A magnetically activatable product as claimed in any of claims 1 to 10 wherein the magnetic layer is formed by a laminating adhesive applied as or just before the two outer sheets are brought together in a laminating press or similar equipment.

15. A method of storing digital magnetic data, which comprises writing digital data to a product according to any one of the preceding claims using a magnetic data writer.

16. A method of reading digital magnetic data, which comprises writing digital data to a product according to any one of claims 1 to 14 and subsequently reading said data using a magnetic data reader.

## Patentansprüche

1. Magnetisch aktivierbares Bogenprodukt, umfassend ein Paar laminierte Außenbögen zwischen denen sich eine magnetische Schicht befindet, welche magnetisch aktivierbare Partikel in einer Bindemittelmatrix umfasst, wobei die Außenbögen ausreichende Deckfähigkeit besitzen, um das Äußere der magnetischen Schicht abzudecken; mindestens eine der Außenbögen ist an seiner nach außen gerichteten Oberfläche mit einer Beschichtung versehen, welche entweder Mikrokapseln, enthaltend eine Lösung mindestens eines chromogenen Materials oder dispergierte Tropfen, enthaltend mindestens ein chromogenes Material in einer bei Druck aufbrechenden Matrix, oder eine Farbentwicklerzusammensetzung, oder beides Mikrokapseln, enthaltend mindestens ein chromogenes Material und auch einen Farbentwickler.

2. Magnetisch aktivierbares Bogenprodukt nach Anspruch 1, bei dem eine nach außen gerichtete Oberfläche versehen ist mit einer Beschichtung aus Mikrokapseln, enthaltend eine Lösung mindestens eines chromogenen Materials, oder dispergierte Tropfen, enthaltend mindestens ein chromogenes Material in einer unter Druck aufbrechenden Matrix und die andere nach außen gerichtete Oberfläche mit einer Beschichtung eines Farbentwicklers versehen ist.

3. Magnetisch aktivierbares Bogenprodukt nach Anspruch 1 oder Anspruch 2, wobei die Außenbögen aus Papier sind.

4. Magnetisch aktivierbares Produkt nach Anspruch 3, wobei die Außenbögen jeweils ein leichtgewichtiges Rohpapier mit einem Gewicht von 50 g/m² oder weniger ist.

5. Magnetisch aktivierbares Bogenprodukt nach Anspruch 1 oder Anspruch 2, wobei die Außenbögen aus einem Plastikmaterial sind, welches die Eigenschaften von Papier simuliert.

6. Magnetisch aktivierbares Produkt nach einem der vorherigen Ansprüche, wobei mindestens eine der Außenbögen mit einer Pigment-Bindemittelgrundierungsbeschichtung an seiner nach innen gerichteten Oberfläche versehen ist.

7. Magnetisch aktivierbares Produkt nach Anspruch 6, wobei die Grundierungsbeschichtung aus herkömmlichen Beschichtungspigmenten formuliert ist, wie sie in der Papierindustrie eingesetzt werden.

8. Magnetisch aktivierbares Produkt nach Anspruch 7, wobei die Grundierungsbeschichtung aus Calziumcarbonat, einem Ton und/oder Titandioxid formuliert ist.

9. Magnetisch aktivierbares Produkt nach Anspruch 8, wobei die Grundierungsbeschichtung aus ausgefälltem Calziumcarbonat, einem kalzinierten Ton und/oder Titandioxid formuliert ist.

10. Magnetisch aktivierbares Produkt nach einem der Ansprüche 6 bis 9, wobei das Gewicht der Grundierungsbeschichtung im Bereich von 5 bis 15 g/m² liegt.

11. Magnetisch aktivierbares Produkt nach einem der vorherigen Ansprüche, umfassend einen ersten Außenbogen, welcher mit einer Pigmentbindemittel-Grundierungsbeschichtung an seiner nach innen gerichteten Oberfläche versehen ist, eine magnetische Schicht, welche magnetisch aktivierbare Partikel in einer Bindemittelmatrix umfasst und einen zweiten Außenbogen, welcher an seiner nach außen gerichteten Oberfläche mit einer Beschichtung versehen ist, welche eine Farbentwicklerzusammensetzung umfasst.

12. Magnetisch aktivierbares Produkt nach einem der Ansprüche 1 bis 10, wobei die Außenbögen im Wesentlichen identisch sind, anders als die Schicht oder die Schichten der Außenbeschichtung und jeweils einen Basisbogen umfassen, eine Pigment-bindemittel-Grundierungsbeschichtung und eine magnetische Beschichtung, welche auf die Grundierungsbeschichtung aufgebracht ist.

13. Magnetisch aktivierbares Produkt nach einem der Ansprüche 1 bis 10, wobei jeder Außenbogen ein Rohbogen umfasst und eine Pigmentbindemittel-Grundierungsbeschichtung, und wobei die magnetische Schicht durch eine magnetische Beschichtung gebildet wird, welche auf die Grundierungsbeschichtung nur eines der Außenbögen aufgebracht ist.

14. Magnetisch aktivierbares Produkt nach einem der Ansprüche 1 bis 10, wobei die magnetische Schicht gebildet ist durch ein laminiertes Haftmittel, welches bei oder gerade vor dem Zusammenführen der beiden Außenbögen in einer Laminierungspresse oder vergleichbaren Einrichtung aufgebracht wird.

15. Verfahren zum Speichern digitaler magnetischer Daten, wobei digitale Daten unter Verwendung eines magnetischen Datenschreibers auf ein Produkt gemäß einem der vorhergehenden Ansprüche geschrieben werden.

16. Verfahren zum Lesen digitaler magnetischer Daten, wobei digitale Daten auf ein Produkt gemäß einem der Ansprüche 1 bis 14 geschrieben werden und diese Daten anschließend mittels eines magnetischen Datenlesers gelesen werden.

## Revendications

1. Produit en feuille activable magnétiquement comprenant une paire de feuilles externes stratifiées entre lesquelles se trouve une couche magnétique comprenant des particules activables magnétiquement dans une matrice de liant, les feuilles externes ayant une opacité suffisante pour ne pas laisser apparaître la couche magnétique ; au moins l'une des feuilles externes étant recouverte sur sa surface orientée vers l'extérieur d'un revêtement qui comprend soit des microcapsules contenant une solution d'au moins un matériau chromogène, soit des gouttelettes dispersées contenant au moins un matériau chromogène dans une matrice se rompant par pression, soit une composition de révélateur couleur, soit à la fois des microcapsules contenant au moins un matériau chromogène et un révélateur couleur.

2. Produit en feuille activable magnétiquement selon la revendication 1, dans lequel une surface orientée vers l'extérieur est recouverte d'un revêtement composé de microcapsules contenant une solution d'au moins un matériau chromogène, ou de gouttelettes dispersées contenant au moins un matériau chromogène dans une matrice se rompant par pression, et l'autre surface orientée vers l'extérieur est recouverte d'un revêtement composé d'un révélateur couleur.

3. Produit en feuille activable magnétiquement selon la revendication 1 ou la revendication 2, dans lequel les feuilles externes sont constituées de papier.

4. Produit activable magnétiquement selon la revendication 3, dans lequel les feuilles externes sont chacune en papier support léger d'un grammage de 50 g m⁻² ou moins.

5. Produit en feuille activable magnétiquement selon la revendication 1 ou la revendication 2, dans lequel les feuilles externes sont constituées d'un matériau feuille plastique qui imite les propriétés du papier.

6. Produit activable magnétiquement selon l'une quelconque des revendications précédentes, dans lequel au moins l'une des feuilles externes est recouverte d'une couche d'amorce de pigment/liant sur sa surface orientée vers l'intérieur.

7. Produit activable magnétiquement selon la revendication 6, dans lequel la couche d'amorce est formulée à partir de pigments de couchage classiques tels qu'utilisés dans l'industrie papetière.

8. Produit activable magnétiquement selon la revendication 7, dans lequel la couche d'amorce est formulée à partir de carbonate de calcium, d'une argile, et/ou de dioxyde de titane.

9. Produit activable magnétiquement selon la revendication 8, dans lequel la couche d'amorce est formulée à partir de carbonate de calcium précipité, d'une argile calcinée, et/ou de dioxyde de titane.

10. Produit activable magnétiquement selon l'une quelconque des revendications 6 à 9, dans lequel le grammage de la couche d'amorce se situe dans la plage de 5 à 15 g m⁻².

11. Produit activable magnétiquement selon l'une quelconque des revendications précédentes, lequel comprend une première feuille externe recouverte d'une couche d'amorce de pigment/liant sur sa surface orientée vers l'intérieur, une couche magnétique comprenant des particules activables magnétiquement dans une matrice de liant, et une seconde feuille externe recouverte sur sa surface orientée vers l'extérieur d'un revêtement qui comprend une composition de révélateur couleur.

12. Produit activable magnétiquement selon l'une quelconque des revendications 1 à 10, dans lequel les feuilles externes sont sensiblement identiques, différentes de la ou les couches de revêtement externes, et comprennent chacune une feuille support, une couche d'amorce de pigment/liant et un revêtement magnétique déposé au-dessus de la couche d'amorce.

13. Produit activable magnétiquement selon l'une quelconque des revendications 1 à 10, dans lequel chaque feuille externe comprend une feuille support et une couche d'amorce de pigment/liant, et dans lequel la couche magnétique est formée par un revêtement magnétique déposé au-dessus de la couche d'amorce d'une seule des feuilles externes.

14. Produit activable magnétiquement selon l'une quelconque des revendications 1 à 10, dans lequel la couche magnétique est formée par un adhésif stratifiable déposé au moment de ou juste avant la réunion des deux feuilles externes dans une presse à stratifier ou un équipement similaire.

15. Procédé de stockage de données magnétiques numériques, qui comprend l'écriture de données numériques dans un produit selon l'une quelconque des revendications précédentes en utilisant un moyen d'écriture de données magnétiques.

16. Procédé de lecture de données magnétiques numériques, qui comprend l'écriture de données numériques dans un produit selon l'une quelconque des revendications 1 à 14 et ensuite la lecture desdites données en utilisant un lecteur de données magnétiques.
